# EUROPEAN PATENT SPECIFICATION

(11) **EP 0 597 718 B1**
(45) Date of publication and mention of the grant of the patent: **21.02.1996**
(21) Application number: 93309040.9
(22) Date of filing: 11.11.1993
(51) Int. Cl.: F16L 3/22, F16B 37/08

(54) **Pipe holder**
Rohrträger
Support pour tuyaux

(30) Priority: 13.11.1992 JP 78213/92 U; 23.04.1993 JP 21493/93 U
(43) Date of publication of application: 18.05.1994
(73) Proprietor: EMHART INC., Newark, Delaware 19711 (US)
(72) Inventor: Nakanishi, Hideaki, Toyohashi City, Aichi-Ken (JP); Murata, Masahiko, Utsunomiya City, Tochigi-Ken (JP)
(74) Representative: Randall, John Walter

(56) References cited:
- DE-U- 8 529 669
- FR-A- 2 558 902

## Description

The present invention relates to a pipe holder for securing a fuel pipe, a brake line or the like held on, say a panel of a vehicle body.

Many holders made of synthetic resin has been developed for securing fuel pipes, brake lines, etc on say, a panel of a vehicle body. One of such pipe holders is described in Japanese Patent Publication No.02-36806 and FR-A-2 558 902. This pipe holder has a nut-like member to be fixed to a stud which is secured e.g. by welding to a panel and which is formed with threads on the sides thereof, and a pipe holding member having a base and pipe grip portion which extend integrally from the base transversely and hold pipes which are pressed into openings thereof, and it is so arranged that the base of the pipe holding member is fixed to the panel when the nut-like member is fixed to the stud so that the pipes held in the pipe grip portions of the pipe holding member can be secured thereby on the panel.

For such a pipe holder, varied types of pipe holding members usually need to be prepared to correspond to differing layouts of pipes to be secured to the panels. This requires varied types of pipe grip portions to be prepared correspondingly to layouts of the various pipe, the base requiring not change of its shape. Accordingly, if common use of the base is possible, the number of parts to be changed for dealing with a plurality of pipe layouts can be reduced.

The above described pipe holder can be fixed to a threaded stud temporarily and positions of pipes mounted in the pipe grip portions adjusted while the pipe holder is temporarily fixed, thus dealing with a possible error in the position of the stud longitudinally with respect to the pipes. Even with such a pipe holder, however, adjustment of the stud position normal to the axial direction of the pipes requires time and effort, that is, the pipe holder has difficulty in adjusting to an error in the mounting position of stud on the panel surface two-dimensionally.

Accordingly, the present invention aims to provide a pipe holder capable of dealing with changes in pipe layout by varying a minimum number of component parts.

It is also an object of the present invention to provide a pipe holder which can mount pipes on a vehicle body while readily permitting adjustment of the positions of the pipes both axially and normally to the axis with respect to the pipes; that is, a pipe holder that enables two-dimensional adjustment on the panel surface to be affected.

According to the present invention, a pipe holder is provided having a nut-like member to be fixed to a stud which is secured to a panel and formed with threads on the sides thereof, and a pipe holding member base and pipe grip portions which extend integrally from the base transversely and hold pipes which are pressed into openings thereof, the base of the pipe holding member being fixed to the panel when the nut-like member is fixed to the stud so that the pipes held in the pipe grip portions of the pipe holding member can be secured thereby on the panel, characterised in that the pipe holder has a coupling member to connect the nut-like member and the pipe holding member together and the coupling member is formed with a cavity to receive the shank of the nut-like member so that the nut-like member whose shank is received in said cavity can be connected to the coupling member, the cavity of the coupling member being provided with temporary engagement means to engage with threads of the stud.

Preferably, the coupling member is received in and connected to a receiving recess of the pipe holding member which has play which allows the coupling member to move perpendicularly to the longitudinal direction of the pipes held by the pipe holding member.

In order that the invention be better understood, three preferred embodiments will now be described in greater detail by way of example with reference to the accompanying drawings in which:-
Figure 1 is an exploded perspective view of a pipe holder which is the first embodiment of the present invention;
Figure 2 is a plan view of a pipe holding member of the embodiment of Figure 1;
Figure 3 is a front view of the pipe holding member of Figure 2;
Figure 4 is a sectional view taken along line A-A of Figure 3;
Figure 5 is a plan view of a coupling member of the embodiment of Figure 1;
Figure 6 is a front view of the coupling member of Figure 5;
Figure 7 is a sectional view taken along line B-B of Figure 5;
Figure 8 is a plan view of the pipe holding member of the embodiment of Figure 1, when holding pipes;
Figure 9 illustrates the attachment of the pipe holder holding pipes to a threaded stud on a panel;
Figure 10 is an exploded perspective view of a pipe holder of a second embodiment according to the present invention;
Figure 11 is a view sectioned along line C-C of Figure 10;
Figure 12 illustrates the connection of the coupling member to the pipe holding member of the embodiment of Figure 10;
Figure 13 shows that a shield and the nut-like member to be connected to the pipe holding member of the embodiment illustrated in Figure 12;
Figure 14 illustrates the fixing of the pipe holding member of Figure 13 having the pipes held therein to the stud;
Figure 15 shows the completed assembly of Figure 14 in which the pipes are fixed to the panel by means of the pipe holder;
Figure 16 shows the relation between the accurately attached stud and the pipe holder of the second embodiment;
Figure 17 shows the relation between the inaccurately attached stud and the pipe holder of the second embodiment, and
Figure 18 is an exploded perspective view of a pipe holder of a third embodiment according to the present invention.

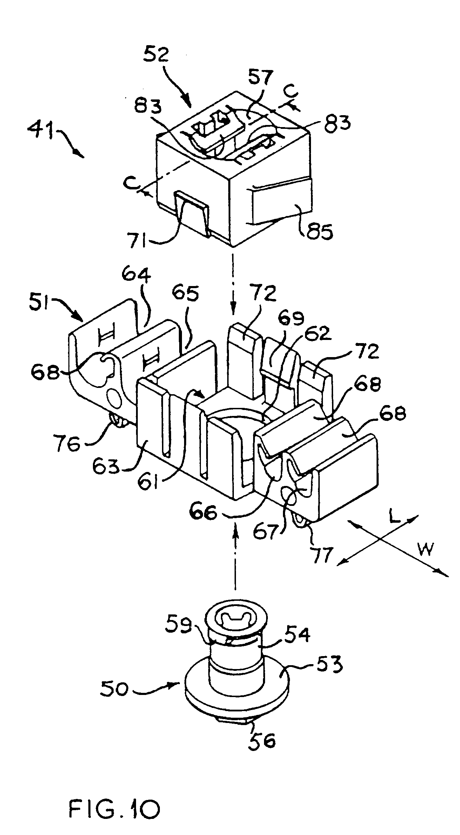

Referring to the drawings, a pipe holder (1) comprises a nut-like member (2) to be screwed to a threaded stud (see Figure 9) secured to a panel of a vehicle body, a pipe holding member (3) to be fixed to the panel by means of the nut-like member (2), and a hollow coupling member (4) to connect the nut-like member (2) and the pipe holding member (3) together. The three members are made of a plastic and are handled as an integral assembly, with the coupling member (4) as an intermediary, for the convenience both of transport and of the pipe mounting operation.

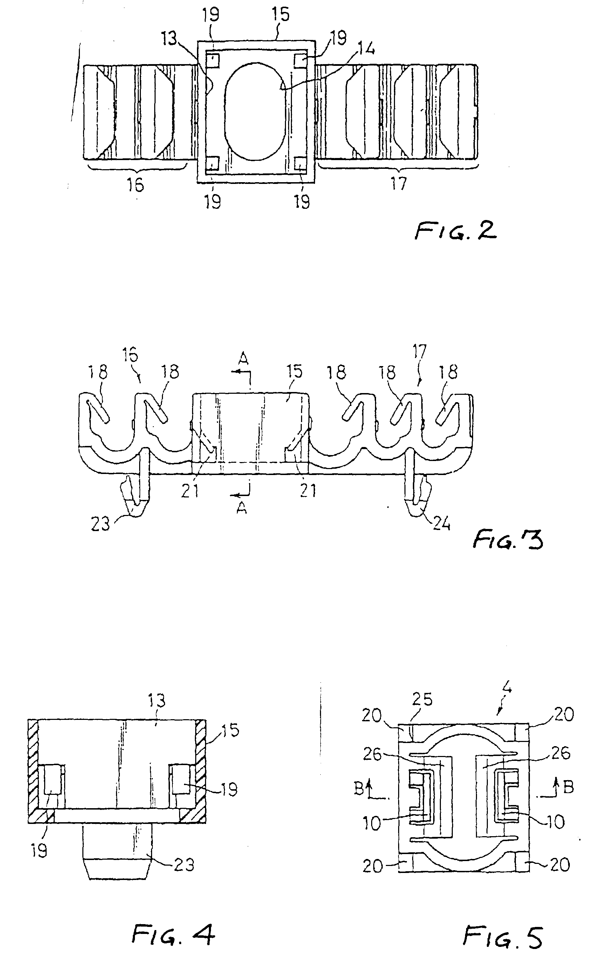

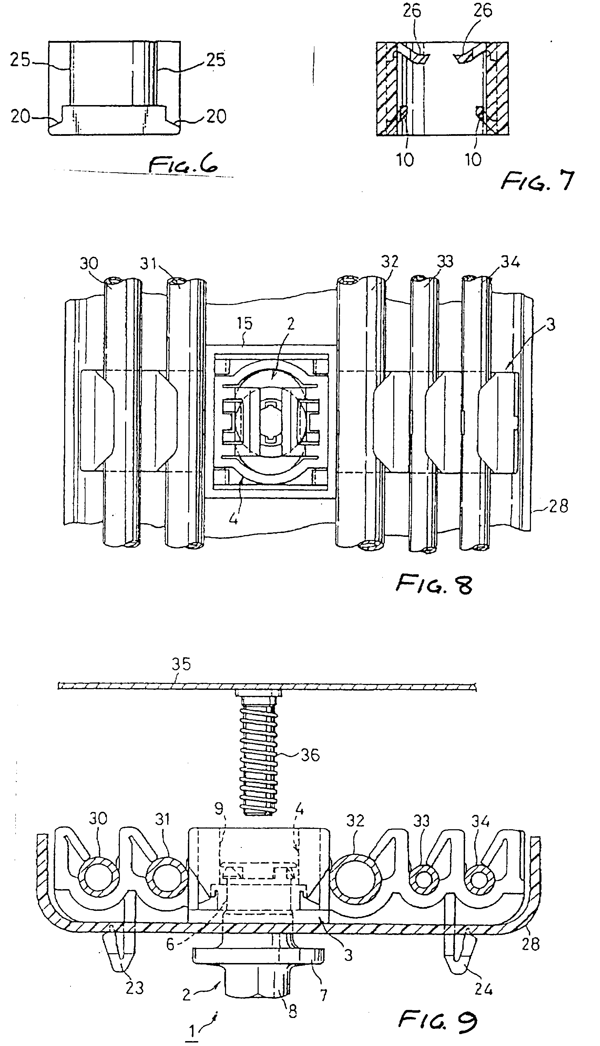

The nut-like member (2) comprises a hollow shank (6) adapted to receive a threaded stud, a flange (7) below the shank (6), and a head (8) at the lower end thereof, the head (8) being formed, for example, as a hexagon for rotating the nut-like member (2). In an upper end portion of the shank (6), engagement portions (11) are formed for engagement with engagement pawls (10) (see Figure 7) in a lower portion of a cavity (9) of the coupling member (4). When the head (8) is rotated, e.g. by means of a tool, to screw the hollow shank (6) on to a threaded stud (see Figure 9), the shank (6) of the nut-like member (2) is screwed and fixed to the threaded stud. This screwing operation fixes the pipe holder (1) to the stud, and pipes held therein are thereby fixed to the panel. When the head (8) is rotated inversely, the pipe holder (1) is detached from the stud.

The pipe holding member (3) is described in the following, by reference to Figures 2, 3 and 4. Pipe holding member (3) comprises a base (15) formed with a box-shaped receiving recess (13) to receive the box-like coupling member (4) and a substantially elliptical hole (14) on the bottom side thereof for receiving the nut-like member (2), and a plurality of pipe grip portions (16) and (17) integrally formed transversely on both sides of the base. The pipe grip portions (16) and (17) are U-shaped like upwardly opening troughs, each formed with a resilient wing (18) extending from the upper end obliquely toward the bottom. The wings serve to prevent pipes pressed in from escaping. The hole (14) for the receipt of the nut-like member (2) is formed to be substantially elliptic so that the nut-like member (2) can slightly move longitudinally to absorb a pitch error of the studs, and its minor axial length is smaller than the diameter of the flange (7) of the nut-like member. On the lower side of each corner of walls defining the receiving recess (13) of the base (15), an engagement pawl (19) is formed. The engagement pawls (19) engage with engagement portions (20) in the four corners of the coupling member (4) received in the receiving recess (12) to connect the coupling member (4) to the pipe holding member (3).

On the back of the pipe grip portions (16) and (17) of the pipe holding member (2), two engagement pawls (23) and (24) spaced apart by a predetermined distance, are provided. The engagement pawls (23) and (24) function to hold a shield (see Figure 9). Although they are illustrated in a specific form, their shape, as well as their number, is not critical as long as they can hold the shield.

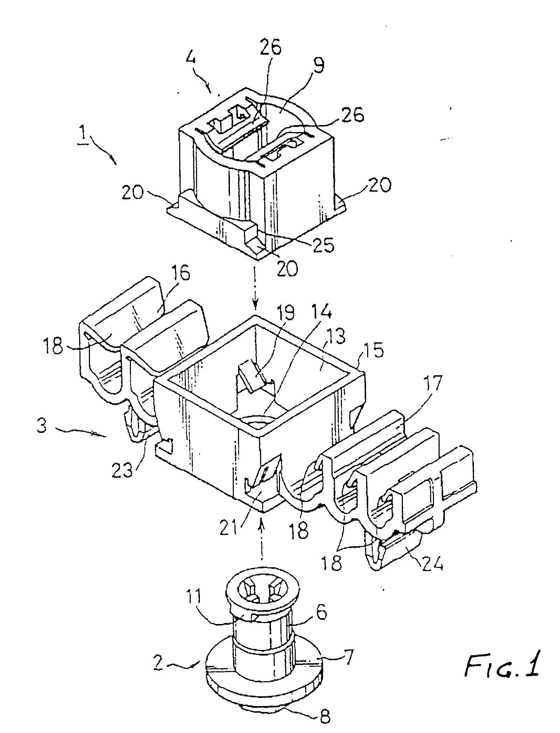

The coupling member (4) is described in the following, with reference to Figures 5, 6 and 7. The coupling member (4) is formed substantially in a box-like shape and is connected to the pipe holding member when it is received in the receiving recess (13) formed in the base (15) of the pipe holding member (3). For this connection, engagement portions (20) arranged to engage with engagement pawls (19) are formed in lower portions of the four corners of the coupling member (4) as described earlier. Since the engagement portions (20) are formed, the four corners of the coupling member (4) are indented so as to form V-shaped grooves (25) extending vertically. Further, coupling member (4) is formed with a cavity (9) to receive the shank (6) of the nut-like member (2). The cavity (9) is formed large enough to receive the shank (6) of the nut-like member and to allow it to move longitudinally with respect to the pipes (vertically in Figure 5). On the lower side of the cavity (9), a pair of engagement pawls (10) arranged to engage with the engagement portions (11) of the nut-like member (2) when the shank (6) of the nut-like member is received therein is formed. Forming the engagement portions (11) of the two diametrically opposite positions as shown in Figure 1, instead of using the entire periphery of shank (6), and forming the rest of the periphery on a slant allows the nut-like member to be detached from the coupling member (4) simply by rotating the former. In an upper portion of the cavity (9) of the coupling member, temporarily-fixing engagement pawls (26) arranged to engage with threads of a threaded stud are formed to fulfil the function of temporary fixing to the stud.

The operation of mounting a plurality of pipes (including the shield if necessary) on a panel by the use of the pipe holder (1) of the above-described structure is now explained with reference to Figures 1, 8 and 9. The coupling member (4) is attached to the pipe holding member (2) when it is pressed into the receiving recess (13) of the base (15) of the pipe holding member (3) and the engagement portions (20) of the coupling member (4) come into engagement with the engagement pawls (19) of the base (15). When the shank (6) of the nut-like member (2) is inserted into the holder (14) of the base (15) and the cavity (9) of the coupling member (4) and the engagement portions (11) of the shank (6) engage with the engagement pawls (10) of the coupling member (4), the shank (6) of the nut-like member (2) is connected to the pipe holding member (3) attached with the coupling member (4). When a shield (28) is attached, the engagement pawls (23 and 24) extending onto the bottom side of the pipe holding member (3) attached with the coupling member (4) are pressed into mounting holes of the shield (28) and thereafter, the nut-like member (2) is pressed into the base (15) and the coupling member (4). A plurality of pipes (30 to 34) are attached to the pipe grip portions (16 and 17) of the pipe holding member (3) when pressed into the latter.

When delivered to motor vehicle assembly line, the pipe holder is holding the pipes (30 to 34) (and optionally the shield (28)) and the nut-like member (2) is connected via the coupling member (4) to the pipe holding member 3. In an assembly line, as shown in Figure 9, the pipe holder (1) is pressed so that threaded stud (36) fixed e.g. by a welding, to a panel (35) can be received in the cavity (9) of the coupling member (4). By pressing, the temporary-fixing engagement pawls (26), the coupling member (4) come into engagement with threads of the stud (36) and the pipe holder (1) is temporarily fixed to the stud (36). During this temporary fixing, the pipe holder (1) is positioned correctly in relation to the stud (3) for properly positioning the pipes held on the panel surface. If the pipe holder (1) is out of position longitudinally with respect to the pipes, adjustment is possibly by moving the nut-like member (2) in the hole (14) of the base (15) and the cavity (9) of the coupling member (4).

When the head (8) of the nut-like member (2) is rotated e.g. by means of a tool, the hollow shank (6) of the nut like member (2) is screwed to the threaded stud (36) while being threaded and the flange (7) pressed to the base (15) (and the shield (28)) of the pipe holding member (3) upwardly, and together with the pipe holding member (3), the coupling member (4) is pressed firmly onto the panel (35) so that the pipe holder (1) is secured and the pipes (30 to 34) are connected firmly to the panel (35). If the pipe holder needs to be detached for pipe replacement or the like, it can be detached easily by rotating the head (8) of the nut-like member (2) inversely.

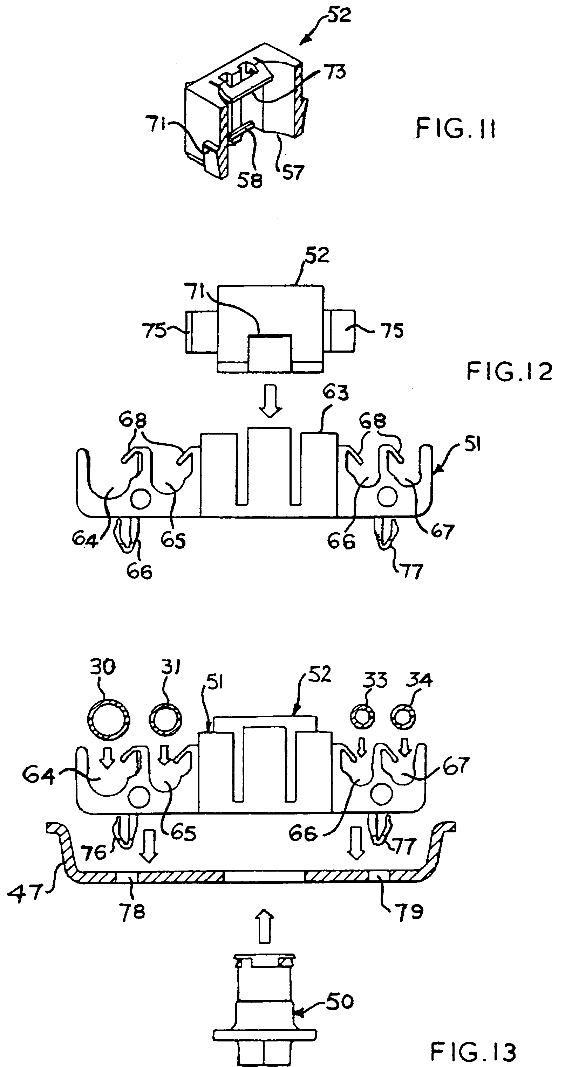

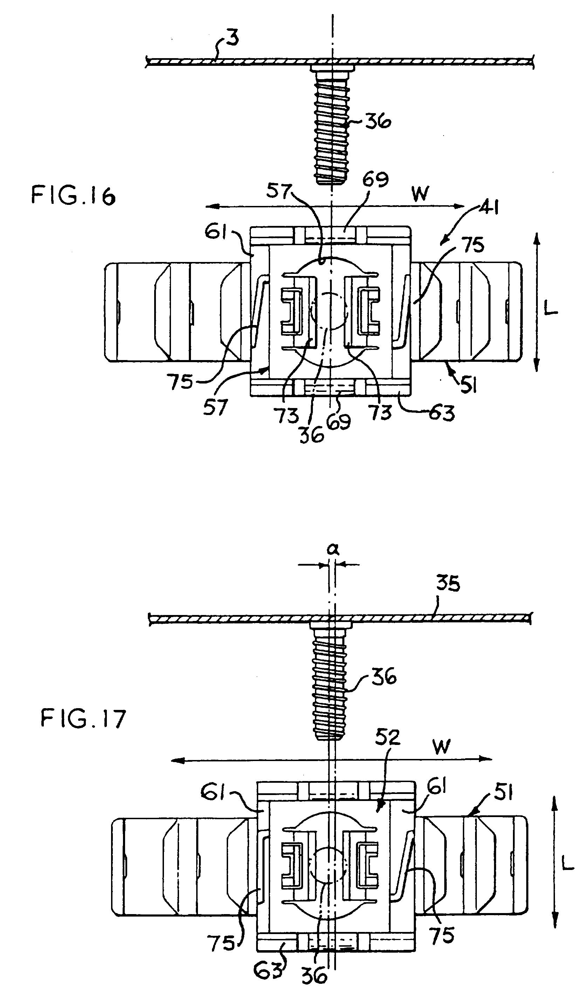

A second embodiment of the present invention is now described with reference to the accompanying drawings. Figures 10 and 11 show details of a pipe holder (41) of another preferred embodiment of the present invention. Figures 12 through 15 show steps of mounting pipes (30, 31, 33 and 34) having different diameters, which are a fuel pipe, a brake line and the like, gripped by the pipe holder (41), on a panel (35) of a vehicle body by means of a threaded stud (36) welded to the panel (35), and attaching a shield (47) to the panel (35). Figures 16 and 17 show how to adjust the positions of the pipes normal to the axial direction of the pipes by the use of the pipe holder (41).

The structure of the pipe holder (41) is described in the following with reference to Figures 10 and 11. The pipe holder (41) comprises a nut-like member (50) screwed to a threaded stud (36) secured to the panel (35) and fixed to a stud, a pipe holding member (51) to be fixed to the panel (35) by means of the nut-like member (50) and a hollow coupling member (52) to connect the nut-like member (50) and the pipe holding member (51) together. The three members are handled as an integral assembly, with the coupling member as an intermediary, for the convenience of transport and of the pipe mounting operation.

The nut-like member (50) comprises a hollow shank (54) to receive the threaded stud (36), a flange (55) below the shank (54) and a head (56) at the lower end of the member (50), and the head (65) is formed, for example, as a hexagon for rotating the nut-like member (50). In an upper end portion of the shank (54), engagement portions (59) for engagement with engagement pawls (58) in a hollow (57) of the coupling member (52) are formed. When the head (56) is rotated by means of an impact wrench or the like to screw the hollow shank (54) onto the threaded stud, the shank (54) is secured to the stud. This screwing operation fixes the pipe holder (41) to the stud (36) and the pipes (30, 31) held by it, are fixed to the panel (35) as a result. Rotating the head (56) inversely detaches the pipe holder (41) from the stud (36).

The pipe holding member (51) comprises a base (63) formed with a box-shaped receiving recess (61) to receive the box-like coupling member (52) and with a hole (62) on the bottom side for receiving the nut-like member (50), and a plurality of pipe grip portions (64, 65, 66 and 67) integrally formed transversely on both sides. The pipe grip portions (64 to 67) are U-shaped like upwardly opening troughs, each formed with a resilient wing (68) extending from the upper end obliquely toward the bottom. The wing serves to prevent a pipe which has been pressed in from being released. The hole (62) to receive the nut-like member (50) is formed to be smaller in diameter than that of the flange (55) of the nut-like member (50). On walls defining the receiving recess (61) of the base (63), engagement pawls (69) are formed for engagement with engagement portions (71) of the coupling member (52) to connect the coupling member (52) to the pipe holding member (51). Further, on portions of the walls of the recess (61), guides (72) tapered upwardly are formed so as to facilitate the insertion of the coupling member (52).

The coupling member (52) is formed in a box-like shape and is connected to the pipe holding member (51) when the coupling member is received in the recess (61) formed in the base (63) of the pipe holding member (51). For this connection, the engagement portions (71) to engage with the engagement pawls (69) formed in the receiving recess (61) of the base (63) are formed on two sides of the coupling member (52) as described above. The coupling member (52) is also formed with a cavity (57) to receive the shank (54) of the nut-like member (50) and the cavity (57) is formed with engagement pawls (58) to engage with the engagement portions (59) of the nut-like member when the cavity (57) has received the shank (54) and forming the remaining portions as slanted surfaces as illustrated, instead of forming them about the entire periphery, to rotate the nut-like member. By forming the engagement pawls (58) in two positions diametrically opposing to each other on the shank (54) and forming the remaining portions as slanted surfaces as illustrated, instead of forming them about the entire periphery, to rotate the nut-like member can easily detach it from the coupling member 52. In upper portions of the cavity (57) of the coupling member, temporary engagement pawls (73) to engage with threads of the threaded stud are formed to function as temporary engagement means with the stud.

The cavity (57) of the coupling member is elongated in section along the longitudinal direction of the pipes held by the pipe holding member (51). This enables the pipe holder to adjust the positions of pipes out of place longitudinally (in the direction L in Figure 10) without moving the pipes themselves. The elongated shape of the hole also allows the form of the engagement pawls (73) to be elongated so as to ensure temporary fixing to the stud. Further, the coupling member (52) is received in the box-shaped receiving recess (61) of the pipe holding member so as to move perpendicularly (in the direction W in Figure 10) to the axial direction of the pipes. In other words, the coupling member (52) has play in the direction W as its length in that direction is shorter than the length of the receiving recess (61) in the direction W. This allows the coupling member (52) to move also in the direction W for positional adjustment in addition to the capability of positional adjustment in the direction L (by making use of the cavity (57) shaped like an elongated hole or by sliding the pipes). On both sides of the coupling member in the direction W, resilient pieces (75) are provided to resiliently abut on the sides of the receiving recess (61) for the prevention of shaking.

On the back of the pipe grip portions of the pipe holding member (51), two engagement pawls (76 and 77) are illustrated in a specific form, their shape, as well as their number, is optional as long as they can function to hold the shield (47).

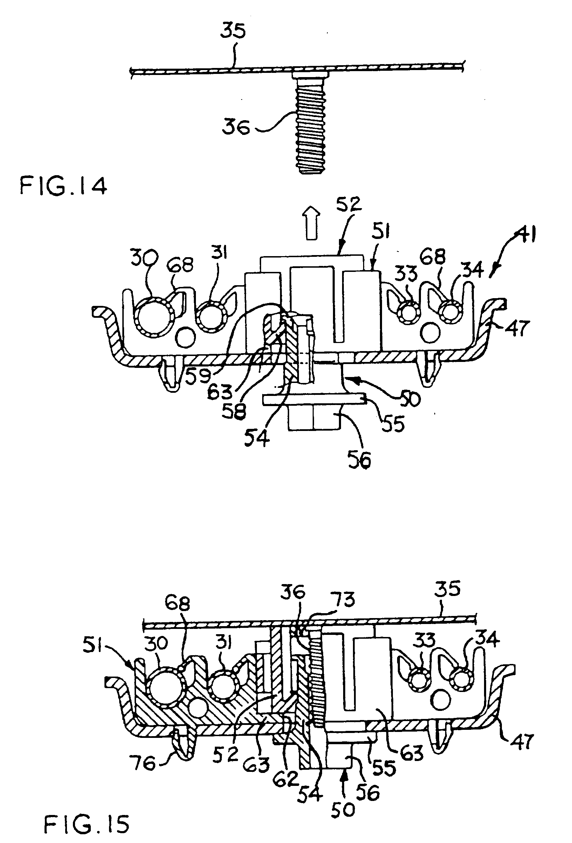

The operation of mounting the pipes (30 to 34) (including the shield (47) if desired) on the panel (35) by means of the pipe holder (41) constructed as described above are explained with reference to Figures 12 through 15. To begin with, as shown in Figure 12, the coupling member (52) is received in the receiving recess of the base (63) of the pipe holding member (51) and connected to the pipe holding member (51). When the shank (54) of the nut-like member (50) is inserted into the cavity of the coupling member (52) which has been connected the pipe holding member (51), the engagement portions (59) of the shank (54) come into engagement with the engagement pawls (58) of the nut-like member (50) to connect the two members together (see figure 14). If the shield (47) is attached, the engagement pawls (76 and 77) extending downwardly from the pipe holding member (51) connected to the coupling member (52) are pressed into mounting holes (78 and 79) of the shield (47) as shown in Figure 13 and thereafter the nut-like member (50) is pressed into the coupling member (52). The pipes (30 to 34) are pressed into and mounted on the pipe grip portions 64 to 67) of the pipe holding member (51).

When delivered to vehicle motor assembly line, the pipe holder is loaded with pipes (30 to 34) (and optionally, shield (47)) and the nut-like member (50) is connected via the coupling member (52) to the pipe holding member (51). In the assembly line, as shown in Figure 14, the threaded stud (36) fixed to the panel (35) is pressed so as to be received in the cavity of the coupling member (52) of the pipe holder (41) in the above-mentioned state and the temporary engagement pawls of the coupling member (52) come into engagement with threads of the stud (36) so that the pipe holder (41) can be temporarily fixed to the stud (36). During this temporary fixing, the pipe holder (41) is positioned correctly to the stud to ensure placing of the held pipes on the panel surface. If the pipe holder (41) is out of position with respect to the stud in the direction L in Figure 10, or in the axial direction of the pipes, adjustment is made by sliding the pipes in the direction L from the pipe grip portions (or by making use of the cavity which is elongated oval in section). If the pipe holder (41) is out of position with respect to the stud in the direction W in Figure 10, namely, normal to the axial direction of the pipes, adjustment is carried out as described later with reference to Figures 16 and 17.

Next, when the head (6) of the nut-like member (50) is rotated, the hollow shank (54) of the nut-like member (50) is secured to the stud (36) while being threaded by the stud and the flange (55) presses the base (63) of the pipe holding member (51) (and optionally the shield (47)) upwardly. This presses the coupling member (52) together with the pipe holding member (51) strongly onto the panel (35) so that pipe holder (41) can be fixed and the pipes (30 to 34) and shield (47) can be firmly connected to the panel (35). If the pipe holder (41) needs to be removed for example to replace the pipes, it can be detached easily by rotating head (56) of the nut-like member (50) inversely.

Adjustment of the pipe holder (41) (in the direction W in Figure 10) to the axial direction of the pipes is described with reference to Figures 16 and 17. Figure 16 shows the stud (36) in its proper position normal (the direction W) to the axial direction (the direction L) of the pipes. In this case, the coupling member (52) is in a centre portion of the receiving recess (61) and the two resilient pieces (75) press the walls of the receiving recess evenly. Figure 17 shows the stud (36) which is offset to the left by "*a*" from a predetermined position. In this case, the coupling member (52) is moved to the left by the offset "*a*" of the stud (36). The resilient piece (75) on the left side is thereby deformed substantially to reduce the play between the coupling member (52) and the wall of the receiving recess while the deformation of the resilient piece (75) on the right side is slight to leave greater play between the coupling member and the recess wall. Since an inaccurate positioning normal to the axial direction of the pipes can also be adjusted, in mounting the pipes on a vehicle body, their mounting position can be moved axially and normally, that is, two-dimensional adjustment on the panel surface is possible.

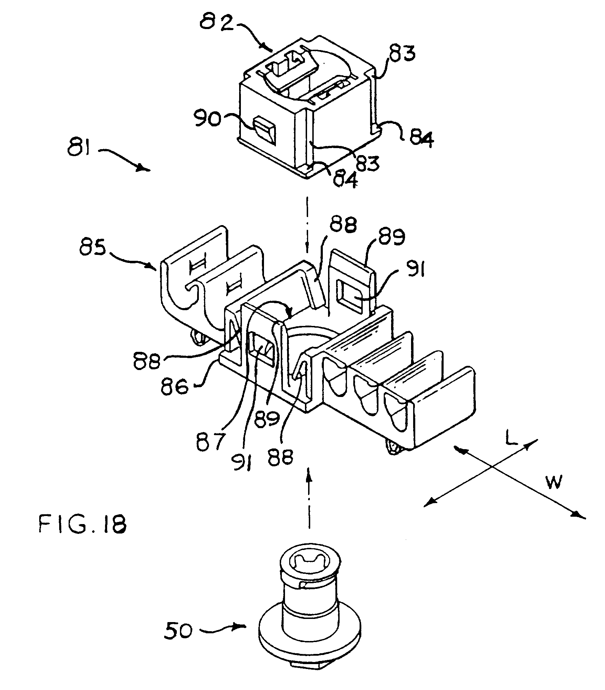

Figure 18 shows a pipe holder (81) as a third embodiment according to the present invention. This embodiment has no resilient pieces on the sides in the direction W of the coupling member and its length in the direction W is reduced correspondingly. Four corners of a coupling member (82) are recessed to form V-shaped grooves (83) extending upward and downward and engagement portions (84) are formed at the lower ends of the grooves. A base (86) of a pipe holding member (85) is formed with a receiving recess (87) which is shorter than the receiving recess (61) of the pipe holding member (51) of the second embodiment in the direction W but longer (to establish play) than the length of the coupling member (62) in the direction W. In each corner of the recess (87), a resilient piece (88) extending slantingly downwardly and inwardly from an upper portion of a wall on the direction W side is provided. On walls (89) on the direction L side of the coupling member (82), engagement holes (91) to receive engagement portions (90) are provided. The length of the engagement holes (91) in the direction W is longer than the engagement portions (90).

In the pipe holder (81) of the third embodiment, when the coupling member (82) is forced into the receiving recess (87) of the pipe holding member (85), the engagement portions (83) on the four corners of the coupling member (82) get over the ends of the engagement pieces (88), which press the engagement portions (83), thereby connecting the coupling member (82) to the pipe holding member (85). When connected, the coupling member (82) is fixed to the pipe holding member (82) vertically and in the direction L. In the direction W, however, there is play between the coupling member (82) and the receiving recess (87) so that the coupling member can move as the resilient engagement pieces (88) bend. When the coupling member (82) is pressed into the receiving recess (87), the engagement portions (90) enter into the engagement holes (91) of the walls (89) to engage with the holes. This engagement further ensures the connection between the coupling member (82) and the pipe holding member (85), and particularly if the coupling member (82) is out of position to press a resilient engagement piece (88) onto one side, the other resilient engagement piece (88) is prevented from getting off the connection. Since the coupling member (82) can be formed shorter in the direction W in the second embodiment, the length in the direction W of the base (86) of the pipe holding member (85) can also be shortened so as to reduce the overall size of the pipe holder.

In the pipe holder according to the present invention, a coupling member to connect the nut-like member and the pipe holding member together is provided and temporary engagement means is formed in the hollow of the coupling member to engage with threads of the stud. Therefore, the nut-like member and the coupling member is required to fit the stud only, regardless of the layout of pipes. Accordingly, it suffices to prepare one or a few types of nut-like members and coupling members in shapes which fit a stud or studs fixed to the panel while preparing only varied types of pipe holding members correspondingly to various layouts of pipes. This simplifies a change of pipe layout since it requires the replacement of only the pipe holding member when the pipe layout is changed. Although the coupling member, functioning as an attaching portion, needs to be made of a firm, tough and expensive material, the pipe holding member can be made of an inexpensive material to curtail overall costs substantially involved in replacing the pipe holder. Additionally because the pipe holder can be manufactured as units suitable for the respective functions and thus standardised, the costs and time of developing the metal moulds necessary for production can be reduced.

## Claims

1. A pipe holder (1) having a nut-like member (2) to be fixed to a stud (36) which is secured to a panel and formed with threads on the sides thereof, and a pipe holding member (3) having a base (15) and pipe grip portions (16, 17) which extend integrally from the base (15) transversely and hold pipes (30-34) which are pressed into openings thereof, the base (15) of the pipe holding member (3) being fixed to the panel (35) when the nut-like member (2) is fixed to the stud (36) so that the pipes (30-34) held in the pipe grip portions (16, 17) of the pipe holding member (3) can be secured thereby on the panel (35), characterised in that the pipe holder (1) has a coupling member (4) to connect the nut-like member (2) and the pipe holding member 3 together and the coupling member (4) is formed with a cavity (9) to receive the shank (6) of the nut-like member (2) so that the nut-like member (2) whose shank (6) is received in said cavity (9) can be connected to the coupling member (4), the cavity (9) of the coupling member (4) being provided with temporary engagement means (26) to engage with threads of the stud (36).

2. A pipe holder according to Claim 1, wherein the coupling member (4) is received in and connected to a receiving recess (13) of the pipe holding member (3) which has play which allows the coupling member (4) to move normally to the axial direction of the pipes (30-34) held by the pipe holding member (3).

## Patentansprüche

1. Rohrträger (1) mit einem mutterartigen Bauteil (2), das an einem Bolzen (36) zu fixieren ist, welcher an einer Platte befestigt ist und an den Seiten mit Gewinden versehen ist, mit einem Rohrhalteteil (3), welches einen Boden (15) und Rohrgreifabschnitte (16, 17) aufweist, die sich einteilig von dem Boden (15) quer erstrecken und Rohre (30 bis 34) halten, die in ihre Öffnungen gedrückt sind, wobei der Boden (15) des Rohrhalteteiles (3) an der Platte (35) fixierbar ist, wenn das mutterartige Bauteil (2) an dem Bolzen (36) festgelegt ist, so daß die in den Rohrgreifabschnitten (16, 17) des Rohrhalteteiles (3) gehaltenen Rohre (30 bis 34) somit an der Platte (35) befestigt werden können,
**dadurch gekennzeichnet,** daß der Rohrträger (1) ein Kupplungsglied (4) zum Verbinden des mutterartigen Bauteiles (2) mit dem Rohrhalteteil (3) aufweist, daß das Kupplungsglied (4) mit einem Hohlraum (9) zur Aufnahme des Schaftes (6) des mutterartigen Bauteiles (2) ausgebildet ist, so daß das mutterartige Bauteil (2), dessen Schaft (6) in dem Hohlraum (9) aufgenommen ist, mit dem Kupplungsglied (4) verbindbar ist, und daß der Hohlraum (9) des Kupplungsgliedes (4) mit einer temporären Eingriffseinrichtung (26) versehen ist, welche Gewinde des Bolzens (36) ergreift.

2. Rohrträger nach Anspruch 1, dadurch gekennzeichnet, daß das Kupplungsglied (4) in einer Aufnahmeausnehmung (13) des Rohrhalteteiles (3) aufgenommen und damit verbunden ist, welche ein Spiel aufweist, das es gestattet, daß das Kupplungsglied (4) senkrecht zur Axialrichtung der Rohre (30 bis 34) bewegbar ist, die von dem Rohrhalteteil (3) gehalten sind.

## Revendications

1. Attache de tubes (1) ayant un élément (2) analogue à un écrou qui doit être fixé à un goujon (36) qui est fixé lui-même à un panneau et muni de filets sur ses côtés, et un élément (3) de retenue de tubes ayant une base (15) et des parties (16, 17) de prise des tubes qui partent de la base (15) dans une direction transversale, en une seule pièce avec la base, et tiennent des tubes (30 à 34) qui sont emboîtés dans des ouvertures de ces parties de prise, la base (15) de l'élément (3) de retenue des tubes étant fixée au panneau (35) lorsque l'élément (2) analogue à un écrou est fixé au goujon (36) de telle manière que les tubes (30 à 34) retenus dans les parties (16, 17) de prise des tubes de l'élément (3) de retenue des tubes puissent être fixés au panneau (35) par ce moyen, caractérisé en ce que l'attache (1) de tubes possède un élément d'accouplement (4) pour assembler l'élément (2) analogue à un écrou et l'élément (3) de retenue des tubes, et l'élément d'accouplement (4) est muni d'une cavité (9) pour recevoir la tige (6) de l'élément (2) analogue à un écrou, de sorte que l'élément (2) analogue à un écrou dont la tige (6) est logée dans ladite cavité (9) peut être assemblé à l'élément d'accouplement (4), la cavité (9) de l'élément d'accouplement (4) étant munie de moyens (26) de prise temporaire pour coopérer avec les filets du goujon (36).

2. Attache de tubes selon la revendication 1, dans laquelle l'élément d'accouplement (4) est logé dans un évidement récepteur (13) de l'élément (3) de retenue des tubes et relié à cet évidement récepteur, cet évidement (13) présentant un jeu qui permet à l'élément d'accouplement (4) de se déplacer perpendiculairement à la direction axiale des tubes (30 à 34) tenus par l'élément (3) de retenue des tubes.
